(19)

Europäisches Patentamt

European Patent Office

Office européen des brevets

(11) **EP 2 701 377 A2**

(12) **EUROPEAN PATENT APPLICATION**

(43) Date of publication:
**26.02.2014 Bulletin 2014/09**

(51) Int Cl.:
**H04N 1/54** (2006.01)

(21) Application number: **13164973.3**

(22) Date of filing: **23.04.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **27.04.2012 US 201261639718 P**

(71) Applicant: **ESKO SOFTWARE BVBA**
**9051 Gent (BE)**

(72) Inventors:
• **Meireson, Baldewin**
**9051 Gent (BE)**
• **Keydar, Moshe**
**Holon (IL)**

(74) Representative: **Bird Goën & Co**
**Wetenschapspark Arenberg**
**Gaston Geenslaan 9**
**3001 Heverlee (BE)**

(54) **Calculating the spectral characteristics of the color resulting from overlaying colorants**

(57)    An apparatus and method for positioning and aligning one or more pre-punched printing plates on a cylinder for imaging a plate in a computer-to-plate drum imaging device. The apparatus includes an imaging cylinder and a registration device connectable to the cylinder. The apparatus includes at least one groove and one pair of register pins, with a first register pin in a fixed position, and a second register pin movable in the groove to a second position, and collinear with the first register pin in the axial direction of the cylinder, arranged such that when connected to the cylinder, the registration device allows a plurality of pre-punched printing plates with variable widths to be positioned and aligned on the cylinder with simplicity.

FIG. 1

EP 2 701 377 A2

**Description**

**FIELD OF THE INVENTION**

The present disclosure relates generally to the field of printing.

**BACKGROUND**

Computer-to-plate (CTP) is an imaging technology used in printing processes, in which image data is output directly from a computer to a printing plate by exposing the printing plate to light energy according to the image data. A printing plate, such as a polymer plate covered by a thin ablatable layer is positioned on an imaging cylinder, e.g., the cylinder (also called drum) of an external drum imaging device. As the cylinder rotates around its axis, an image head moves in the axial direction and focuses one or more laser beams modulated with image data on to the plate's ablatable surface to ablate a pattern.

The process of positioning and aligning one or more printing plates on a cylinder is referred to as registration.

Pre-punched plates are used to allow accurate positioning and alignment on a cylinder. A pre-punched plate has registration holes, e.g., two holes punched near one edge of the plate that match register pins on the cylinder to secure alignment. Because the distance between two holes of a pre-punched plate varies depending on the width of the plate, there is a need to accommodate pairs of register pins that are spaced differently for different width plates.

**BRIEF DESCRIPTION OF THE DRAWINGS**

FIG. 1A shows a perspective view of a cylinder and a registration device connected to the cylinder, according to one embodiment of the present invention. Note that the terms drum and cylinder are used interchangeably in this specification. The registration device has a groove formed by a register bar and a pair of register pins including a first register pin having a fixed position and a second register pin having a variable position in the groove.

FIG. 1B shows an overhead view of the cylinder and the registration device shown in FIG. 1A.

FIG. 2A shows a cross-sectional view of the groove, the register bar, and the first register pin included in the registration device shown in FIGS. 1A and 1B.

FIG. 2B shows another cross-sectional view of the cylinder wherein the register bar is removed from the cylinder and replaced with a bar having no groove.

FIG. 3 shows a flowchart of a method for positioning a pre-punched printing plate on a cylinder according to one embodiment of the present invention.

FIG. 4A shows a pre-punched printing plate positioned on a cylinder that includes an embodiment of the present invention.

FIG. 4B shows another pre-punched printing plate positioned on a cylinder that includes an embodiment of the present invention, with the plate having a different width than the plate shown in FIG. 4A.

FIG. 5 shows a plurality of pre-punched printing plates positioned and aligned on a cylinder that includes an embodiment of the present invention.

FIG. 6A shows a longitudinal cross-sectional view of a cylinder and a registration device connected to the cylinder according to an alternative embodiment of the present invention. The registration device includes a plurality of grooves and a plurality of pairs of register pins. Each pair of register pins includes a first register pin having a fixed position and a second register pin having a variable position.

FIG. 6B shows an overhead view of the cylinder and the registration device shown in FIG. 6A.

FIG. 7A shows a cross-sectional view of a first register pin shown in FIGS. 6A and 6B.

FIG. 7B shows a cross-sectional view of a groove and a second register pin in the groove shown in FIGS. 6A and 6B.

FIG. 7C shows a top view of one f the grooves shown in FIGS. 6A and 6B.

**DESCRIPTION OF EXAMPLE EMBODIMENTS**

*Overview*

Described herein are an apparatus and method for positioning and aligning one or more pre-punched printing plates on a cylinder for imaging a plate in a computer-to-plate drum imaging device. The apparatus includes an imaging cylinder and a registration device connectable to the cylinder. The apparatus includes at least one groove and one pair of register pins, with a first register pin in a fixed position, and a second register pin movable in the groove to a second position, and collinear with the first register in the axial direction of the cylinder, arranged such that when connected to the cylinder, the registration device allows a plurality of pre-punched printing plates with variable widths to be positioned and aligned on the cylinder with simplicity.

Particular embodiments include an apparatus comprising an imaging cylinder for a computer-to-plate imaging device, the cylinder being rotatable around an axis, the rotation defining a circumferential direction, the axis defining an axial direction, the cylinder having a base body and an outer surface, and a registration device connectable to the base body of the cylinder and when connected having an outer surface forming part of the outer-surface of the cylinder. The registration device is arranged to position and align one or more pre-punched printing plates on the outer surface of the cylinder. The registration device when connected includes: a groove extending axially on the outer surface of the cylinder, and forming a gap on the outer surface of the cylinder, a first register pin having a fixed position on the base body of the cylinder, and a second register pin movable in the groove and after being moved to a next position on the base body of the cylinder, being fixable to the next position, wherein the first register pin is insertable into a first hole of a printing plate to provide a starting point for the plate, and wherein the second register pin is insertable into a second hole of the plate, the second hole being at a plate position dependent on the width of the plate and defining, when the first register pin is inserted into the first hole and connected to the fixed position, a second position in the axial  direction on the outer surface of the cylinder, the second register pin being insertable into the second hole after being moved to the second position, and being fixable to the second position to position the plate on the outer surface of the cylinder.

In one embodiment, the groove may be formed by a register bar that is connected into the base body of the cylinder. In another embodiment, the groove may be created directly on the base body of the cylinder without using a register bar.

In some embodiments, the registration device may include a plurality of the grooves and a plurality of pairs of the first and second register pins to allow multiple printing plates to be aligned on the cylinder and operated at the same time.

Particular embodiments include a method comprising arranging one or more pre-punched printing plates on an imaging cylinder for a computer-to-plate imaging device, the cylinder being rotatable around an axis, the axis defining an axial direction, the cylinder having a base body and an outer surface. The method comprises, for each of the plates, inserting a first register pin into a first hole of the plate, the first register pin having a first position on the base body of the cylinder, the first position being a fixed position providing a starting point for the plate; moving a second register pin to a second position on the base body of the cylinder, the second register pin being movable in a groove extending axially on the outer surface of the cylinder, the second position being in the groove and being determined by the position on the plate of a second hole; inserting the second register pin into the second hole of the plate; and fixing the second register pin into the second position, such that when the first register pins are fixed into the respective positions, the plate is positioned on the outer surface of the cylinder.

Particular embodiments also include a method comprising preparing a groove on an imaging cylinder for a computer-to-plate imaging device, the cylinder being rotatable around an axis, the axis defining an axial direction, the cylinder having a base body and an outer surface, the groove extending axially on the outer surface of the cylinder, and forming a gap on the outer surface of the cylinder; preparing a first register pin having a fixed position on the base body of the cylinder, the first register pin being insertable into a first hole of a printing plate to provide a starting point for the plate; and preparing a second register pin movable in the groove, the second register pin being insertable into a  second hole of the plate at a plate position dependent on the width of the plate and defining, when the first register pin is inserted into the first hole and connected to the fixed position, a second position in the axial direction on the outer surface of the cylinder, the second register pin being insertable into the second hole after the second register pin is moved to the second position and fixed to the second position to position the plate on the outer surface of the cylinder.

Particular embodiments may provide all, some, or none of these aspects, features, or advantages. Particular embodiments may provide one or more other aspects, features, or advantages, one or more of which may be readily apparent to a person skilled in the art from the drawings, descriptions, and claims herein.

### Example Embodiment(s)

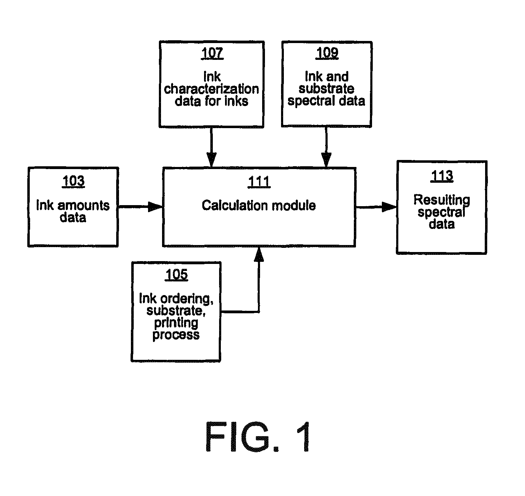

FIGS. 1A and 1B show a perspective view and an overhead view, respectively, of an apparatus that includes an embodiment of the present invention. The apparatus includes an imaging cylinder 101 and a registration device 103. The cylinder 101 is, for example, the cylinder of an external drum imaging device for imaging flexographic plates. The cylinder 101 has an axis 105, which defines an axial direction, and is rotatable around the axis 105. The rotation defines a circumferential direction. The cylinder 101 includes a base body 107 and an outer surface 109.

The registration device 103 includes a groove 111 that extends axially on the base body 107. The groove 111 forms part of the outer surface 109 of the cylinder 101 and causes a gap on the outer surface 109. In one embodiment, the groove 111 is formed by a register bar 113 that is connected into the base body 107. The connection is made using a bolt 115. In other embodiments, the register bar 113 may be connected by using one or more bolts in different ways or by other means such as by gluing the register bar 113 to the base body 107. Also in other embodiments, rather than having the register bar 113 forming the groove 111, the groove 111 may be created directly on the base body 107 of the cylinder 101.

The registration device 103 also includes a pair of register pins consisting of a first register pin 117 and a second register pin 119. The first register pin 117 is insertable into a first registration hole punched on a printing plate, and has a fixed position on the base body 107. In one embodiment, the groove 111 extends from one end of the base body 107 to the other end, and the fixed position is a fixed position in the axial direction in the groove 111. In another embodiment, the groove 111 extends only partially on the base body 107. In another variant embodiment, the fixed position is outside of the groove 111 and collinear therewith in the axial direction. The second register pin 119 is collinear with the first register pin 117 in the axial direction, and is moveable in the groove 111 to a second position at an axial distance from the first register pin 117 that matches the distance between the first hole and a second hole in the printing plate, so that the second register pin 119 can be inserted into the second registration hole. The second register pin 119 is fixable at the second position.

While FIGS. 1A and 1B show only one registration device 103, there may be more than one registration device 103 connected to the base body 107 of the cylinder 101, at different circumferential locations of the cylinder 101. Having multiple registration devices on a cylinder can effectively increase the usability of the cylinder for different sizes of pre-punched printing plates.

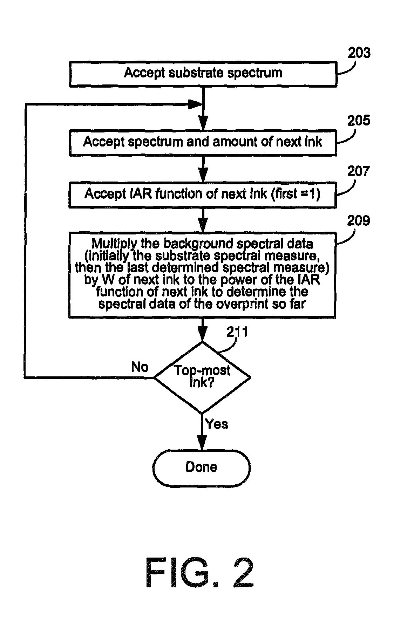

FIG. 2A shows a cross-sectional view of the groove 111, the register bar 113, and the first register pin 117 included in the registration device 103. The groove 111, formed by the register bar 113, has a reverse T-shaped cross-section. The first register pin 117, which has a fixed position, is in the groove 111. In one embodiment, the register pin 117 includes a base 201 that is connected into the register bar 113, which in turn is connected into the base body 107 of the cylinder. The register pin 117 also includes a cap 203 that interacts with the base 201 and rises from the base 201 to above the outer surface 109 of the cylinder 101. The base 201 is fixed into the register bar 113 using a lock screw 205, thus providing the fixed position for the register pin 117. The cap 203 is separable from the base 201 for inserting the pin 117 into a registration hole of a printing plate and connecting the plate onto the outer surface 109 of the cylinder 101.

Although not shown in the drawing, in one embodiment, the second register pin 119 may also include a base and a cap, similar to the base 201 and the cap 203 of the first register pin 117. However, instead of being fixed into the register bar 113 or the base body 107 of the cylinder 101, the base of the second register pin 119 is movable in the groove 111 to provide a variable position for the second register pin 119. Similar to the cap 203 shown in FIG. 2A, the cap of the second register pin 119 also interacts with the base of the pin 119 and rises from the base to above the outer surface 109 of the cylinder 101, and also is separable from the base for inserting the pin 119 into a registration hole of a printing plate.

Therefore, when both caps of the register pins 117 and 119 are separated from their respective bases and connected back to the respective bases after the pins 117 and 119 are inserted into a first and a second hole of a printing plate, respectively, the plate can be positioned on the outer surface 109 of the cylinder 101.

While in one embodiment, the first register pin 117 and the second register pin 119 include base and cap components, in other embodiments, either the first register pin 117 or the second register pin 119 or both may have more or fewer components, but provide the same functionalities. In one such alternate embodiment, the first register pin 117 directly interacts with a threaded pin hole on the register bar 113 or on the base body 107 without going through a base.

For situations in which the groove 111 is not needed, it may be desirable to close the gap on the base body 107 formed by the groove 111. FIG. 2B shows one embodiment according to which the register bar 113 is removable from the base body 107. For example, the register bar 113 that is connected into the base body 107 using a bolt 115 as shown in FIG. 1A and FIG. 1B, may be removed and replaced by a bar 207 that has no groove to close the gap on the base body 107.

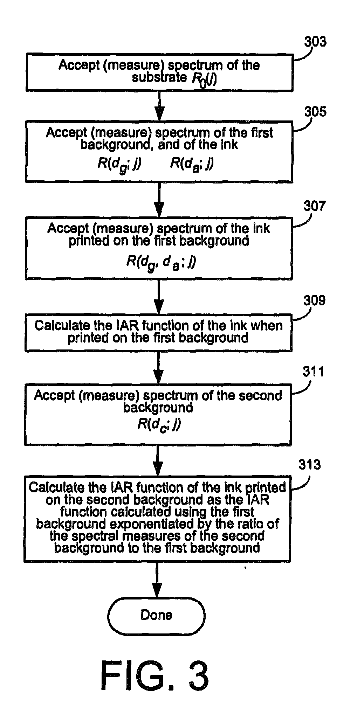

FIG. 3 shows a flowchart of one embodiment of a method in the present invention for positioning a pre-punched printing plate on a cylinder, using a registration device as described above. The plate has at least a pair of registration holes: a first hole and a second hole. In 303, the plate is arranged on the cylinder. 305 includes placing the plate such that the first hole of the plate has the first fixed register pin of the registration device inserted therein at the fixed position on the cylinder for the first register pin. In 307 the second register pin of the registration device, which is movable in the groove of the registration device, is moved to a second position that matches the location of the second hole of the plate. In 309, the second register pin at the second position is inserted into the second hole. In 311, the second register pin is fixed in the second position, and the whole of the edge of plate is therefore securely positioned on the outer surface of the cylinder.

Some embodiments include multiple pairs of register pins, collinear in the axial direction, each pair including a fixed register pin and a second movable register pin, so that a plurality of plates possible with different widths may be registered at the same time on the printing cylinder.

Returning to the flowchart of FIG. 3, repeating the steps 303 to 311, using a plurality of pairs of the first and second register pins, multiple pre-punched printing plates with variable widths can be positioned on a cylinder. The first register pins are at respective fixed positions on the base body, providing separate starting points for the plates. In one version, there is a single groove for all movable second register pins such that the second register pins are each movable in the same groove. In an alternate embodiment there is a separate respective groove in which a respective second register pin is movable. In both such embodiments, the second register pins are moved to their respective second positions determined by respective locations of second holes in the different plates, which are at plate positions dependent on the widths of the plates. All the pin positions are collinear in the axial direction of the cylinder, such that when all the first and second pins are fixed into their respective positions, the plates are positioned and aligned on the outer surface of the cylinder. The plates can be used thereafter for printing in a computer-to-plate imaging device at the same time.

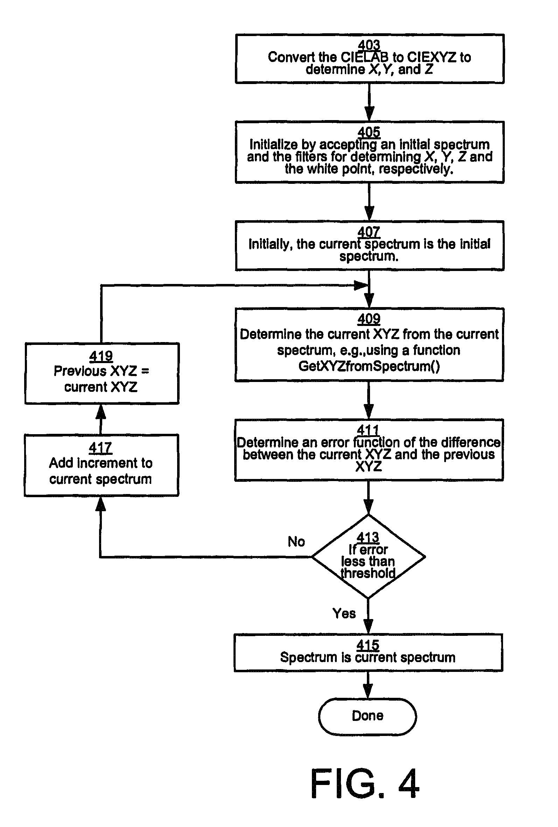

FIG. 4A shows an example of a pre-punched printing plate 401 positioned on the cylinder 101 with one apparatus embodiment of the present invention. The first register pin 117 is inserted into the first hole of the plate 401 to provide a first location for the plate 401 and connected into the fixed position on the base body 107. The second register pin 119 is then moved to a second position in the axial direction in the groove 111, such second position determined by the location of second hole of the plate 401 dependent on the width of the plate 401. The second register pin 119 is then inserted into the second hole. When the first register pin 117 and the second register pin 119 are fixed into their respective positions, the plate 401 is positioned on the outer surface 109 of the cylinder 101.

FIG. 4B shows a pre-punched printing plate 403, which has a different width than the plate 401, positioned on the outer surface 109 of the cylinder 101 using the first register pin 117 and the second register pin 119 in combination. The plate 403 has the same starting point on the outer surface 109 as the plate 401, as determined by the first register pin 117 and its fixed position, e.g., in the groove 111. The second register pin 119, however, is moved to a second position in the groove 111 that is different from the counterpart second position for the plate 401, due to the larger distance between the two registration holes of the plate 403.

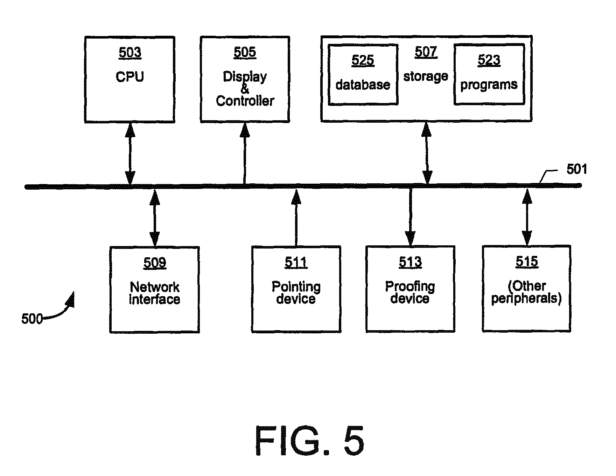

FIG. 5 shows a plurality of pre-punched printing plates 501 positioned and aligned on the outer surface 109 of the cylinder 101. Each plate 501 is positioned on the cylinder 101 using a pair of a respective first register pin 117 and a second register pin 119. Each of the first register pins 117 has a fixed position on the cylinder 101, with a pre-defined distance between adjacent first register pins. In one embodiment, the first register pins are removable. In an alternate embodiment, there are several pre-defined locations for at least one of the first register pins so that different respective locations for the first register pins can be used. Each first register pin 117 has one corresponding second register pin 119 located in between two adjacent first register pins 117. Before being inserted into the respective second holes of the respective plates, each second register pin 119 is movable in the groove 111 between its corresponding two adjacent first register pins 117. All the register pins 117 and 119 are in the groove 111, and therefore are aligned along the axial direction of the cylinder 101. Thus plates 501 are aligned and can be used in printing in a computer-to-plate imaging device at the same time.

In the example shown in FIG. 5, the plates 501 appear as having the same width. This however is not necessary. Plates of different widths, and therefore different inter-distances between registration holes, and be positioned and aligned on the cylinder 101. A plate may also have a width that is larger than any distance between two adjacent fixed register pins 117 shown in FIG. 5. The only limitation is that the sum of the widths of the plates, plus any necessary gaps between adjacent plates as required by a printing operation, be in accordance with the axial length of the base body 107 of the cylinder 101. Depending on the number of plates to be mounted on the cylinder 101, more or fewer pairs of first and second register pins 117 and 119 can be used. In particular, when fewer register pins 117 and 119 are to be used, according to the embodiment shown in FIG. 2A, any unused first and second register pins are removed from the groove 111, in order to give space to a wider plate.

One embodiment includes several locations in which first (fixed-position) register pins may be placed and from which such first register pins may be removed.

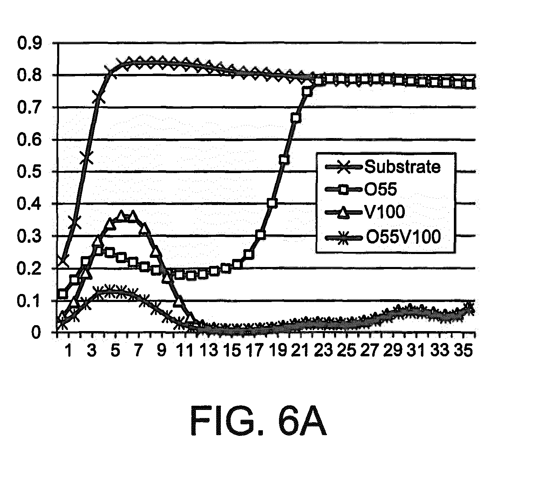

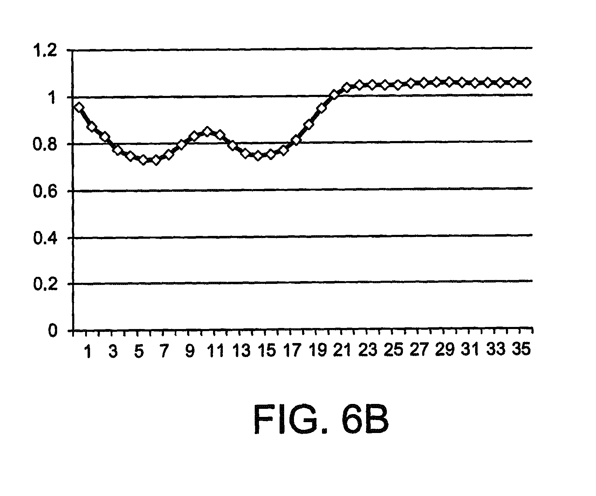

FIGS. 6A and 6B show an alternative embodiment of an apparatus according to the present invention to position and align multiple pre-punched printing plates, such as the plates 501 shown in FIG. 5. FIG. 6A shows a longitudinal cross-section of the drum marked AA in FIG. 6B, and FIG. 6B shows an overhead view of the drum. The apparatus includes a cylinder 601 that may be the same as the cylinder 101 shown in FIGS. 1A and 1B, and a registration device 603 that is similar to the registration device 103 but with some differences. The cylinder 601 has a base body 607 that has an inner surface 605 and an outer surface 609. The registration device 603 includes a plurality of grooves 611, a plurality of pairs of register pins, each pair including a first register pin 617 having a respective fixed position, and a second register pin 619 movable in a respective groove 611. Each first register pin 617, second register pin 619, and groove 611 form a combination. Different from the embodiment shown in FIG. 1A and FIG. 1B, the first register pins 617 are not in the grooves 611 but are attached directly to the base body 607. All the first and second register pins, however, are collinear along the axial direction of the cylinder 601.

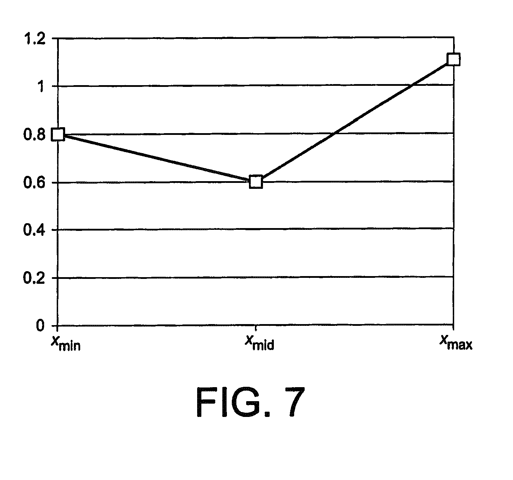

FIGS. 7A, 7B, and 7C show closer views of a first register pin 617, a second register pin 619, and a groove 611, respectively, according to the embodiment shown in FIGS. 6A and 6B. In a cross-sectional view in FIG. 7A, the first register pin 617 is shown in a fixed position on the base body 607, and rises above the outer surface 609. The first register pin 617 may be fixed into the position through interaction with a threaded register pin hole prepared on the base body 607. In a cross-sectional view in FIG. 7B, the second register pin 619 is shown residing in the groove 611, and rises above the outer surface 609. Unlike the groove 111 shown in FIGS. 1A and 1B, which is formed by a register bar 113 therein and has a reverse T-shaped cross-section, the groove 611 is created directly on the base body 607 and has a flat shape cross-section. Nevertheless, as shown in an overhead view in FIG. 7C, the groove 611 also allows the second register pin 619 to be movable along the axial direction in the groove 611, and to be fixable to a *second* position in the groove 611 after the second register pin 619 is moved to the second position.

The elements associated with the apparatus, and the steps associated with the method of the present disclosure may vary widely. Elements and steps may be added, removed, altered, combined, and reordered without departing from the spirit of the scope of the present disclosure. Therefore, the present examples are to be considered as illustrative and not restrictive, and the examples are not to be limited to the details given herein, but may be modified within the scope of the appended claims.

**Claims**

1. A method of operating a processing apparatus to determine a spectral measure of reflectance of an overprint of a plurality of inks made on a substrate using a printing process, the method comprising:

   (a) accepting in the processing apparatus a spectral measure of reflectance of a substrate at a plurality of wavelengths;
   (b) accepting in the processing apparatus a pre-defined order of printing an overprint of a plurality of inks on the substrate;
   (c) for each ink of the plurality of inks, for a respective amount of printing of the ink, accepting or determining in the processing apparatus a respective interaction of absorption and reflection function ("IAR function") indicative of how the ink interacts with a layer of one or more other inks when printed over the layer of the one or more other inks; and
   (d) determining in the processing apparatus the spectral measure of reflectance of the overprint of the plurality of inks printed on the substrate in the pre-defined order in the respective amounts of the inks, including repeatedly multiplying, in the pre-defined order, for each additional ink added to a partial overprint of the inks before the additional ink is added, the spectral measure of the partial overprint by the exponentiation of:

      (i) the ratio of the spectral measure of the additional ink on the substrate to the spectral measure of the substrate
      by
      (ii) the IAR function of the additional ink,
      starting with spectral measure of the substrate.

2. A method as recited in claim 1, wherein the IAR function for a particular amount of a particular ink of the plurality of inks is determined from spectral measures of reflectance of the substrate and of prints made using the printing process of various amounts of the particular ink on the substrate, and one or both of on a gray background and on a black background.

3. A method as recited in claim 2, wherein the gray background comprises black ink printed at 50% coverage amount on the substrate using the printing process.

4. A method as recited in claim 1, wherein the IAR function for a particular amount of a particular ink of the plurality of inks printed over a second ink is determined from spectral measures of reflectance of the substrate and of prints made using the printing process of various coverage percentages of the particular ink and of the second ink on the substrate and overprint charts made using the printing process on the substrate with a set of inks that includes the particular and the second inks.

5. A method as recited in claim 1, wherein the IAR function for a particular amount of a particular ink of the plurality of inks printed over a second ink is determined from spectral measures of reflectance of the substrate and from spectral measures of reflectance of prints made using the printing process of various coverage percentages of the particular ink and of the second ink on the substrate, and from overprint charts made using the printing process on the substrate for process inks, and

6. the spectral measure of an overprint of the particular ink printed over the second ink is determined by determining the process ink amounts corresponding to the spectral measures of reflectance of the prints made with the particular ink and of prints made using the second ink, determining the process ink amounts of the overprint of the particular ink printed over the second ink, and determining the spectral measure of the overprint of the particular ink printed over the second ink from the determined process ink amounts of the overprint. A method as recited in any preceding method claim, wherein determining the IAR function for a particular ink on a particular background includes using the spectral measure of the substrate, the spectral measure of a first background, the spectral measure of the particular ink on the substrate, and the spectral measure of the particular ink on the first background, and calculating the IAR function of the particular ink on the first background using:

$$IAR(d_a; j) = \frac{\log R(d_g, d_a; j) - \log R(d_g; j)}{\log R(d_a; j) - \log R_0(j)},$$

or an equivalent formula,
where $IAR(d_a; j)$ denotes the IAR function for the particular ink in amount $d_a$ at wavelengths of index $j$, $R_0(j)$, $R(d_g; j)$, and $R(d_a; j)$ denote the spectral measures of the substrate, the first background in amount $d_g$, and the particular ink at in amount $d_a$, respectively, at wavelengths of index $j$, $R(d_g, d_a; j)$ denotes the spectral measures of the print of the particular ink on the first background, and log represents the logarithm function in a pre-defined base.

7.   A method as recited in claim 6, wherein the IAR function for the particular ink on the particular background is the IAR function determined for the particular ink on the first background.

8.   A method of operating a processing apparatus to characterize an ink when printed over a second ink or over an overprint of one or more other inks on a substrate using a printing process, the method comprising:

   (a) accepting in the processing apparatus a spectral measure of reflectance of the substrate, the spectral measure being at a plurality of wavelengths;
   (b) accepting in the processing apparatus the spectral measure of reflectance of the ink printed on the substrate;
   (c) accepting in the processing system the spectral measure of reflectance of a first background printed on the substrate;
   (d) accepting or determining in the processing system the spectral measure of reflectance of the ink printed on the first background; and
   (e) determining in the processing system an interaction of absorption and reflection function ("IAR function") indicative of how the ink interacts with a background on which it is printed, and usable for determining the spectral measure of an overprint of the ink over a print of one other ink or an overprint of two or more other inks on the substrate by multiplying the spectral measure of reflectance of the print or overprint of one or more other inks by the exponentiation of

      (i) the ratio of the spectral measure of the ink on the substrate to the spectral measure of the substrate, by
      (ii) the IAR function of the ink.

9.   A method as recited in claim 12, wherein the first background is one of the set of backgrounds consisting of a gray background on the substrate and a black background on the substrate.

10.  A method as recited in claim 9, wherein the gray background comprises black ink printed at 50% coverage amount on the substrate using the printing process.

11.  A method as recited in claim 12, wherein determining the IAR function for an amount of the ink over the first background is determined from spectral measures of reflectance of the substrate and of prints made using the printing process of various coverage percentages of the ink and of the first background on the substrate and overprint charts made using the printing process for process inks, and

12.  the spectral measure of an overprint of the particular ink printed over first background is determined by determining the process ink amounts corresponding to the spectral measures of reflectance of the prints made with the particular ink and of the first background, determining the process ink amounts of the overprint of the particular ink printed over the first background, and determining the spectral measure of the overprint of the particular ink printed over first background from the determined process ink amounts of the overprint.A method as recited in any preceding method claim, wherein determining the IAR function for the ink on the first background includes using the spectral measure of the substrate, the spectral measure of a particular background, the spectral measure of the ink on the substrate, and the spectral measure of the ink on the particular background, and calculating the IAR function of the ink on the particular background using:

$$IAR(d_a; j) = \frac{\log R(d_g, d_a; j) - \log R(d_g; j)}{\log R(d_a; j) - \log R_0(j)},$$

or an equivalent formula, where $IAR(d_a; j)$ denotes the IAR function for the ink in amount $d_a$ at wavelengths of index $j$, $R_0(j)$, $R(d_g; j)$, and $R(d_a; j)$ denote the spectral measures of the substrate, the particular background in amount $d_g$, and the ink at in amount $d_a$, respectively, at wavelengths of index $j$, $R(d_g, d_a; j)$ denotes the spectral measures of the print of the ink on the particular background, and log represents the logarithm function in a pre-defined base,

13. the IAR function for the ink on the first background being the IAR function determined for the ink on the particular background. A method as recited in claim 12, wherein the IAR function for the ink on the first background is the IAR function determined for the ink on the particular background adjusted by exponentiation by an adjustment exponent equal to the ratio of the spectral measures of the first background to the particular background.

14. A non-transitory computer-readable medium with a set of instructions thereon that when executed by one or more processors of a processing system cause carrying out a method of as recited in any preceding method claim.

15. An apparatus comprising one or more processors and storage, the storage comprising instructions that when carried out by one or more of the processors carry out a method as described in any preceding method claim.

FIG. 1

Accept substrate spectrum — 203

Accept spectrum and amount of next ink — 205

Accept IAR function of next ink (first =1) — 207

Multiply the background spectral data
(initially the substrate spectral measure,
then the last determined spectral measure)
by W of next ink to the power of the IAR
function of next ink to determine the
spectral data of the overprint so far — 209

211

No ← Top-most Ink?

Yes ↓

Done

# FIG. 2

Accept (measure) spectrum of the substrate $R_0(l)$ — 303

Accept (measure) spectrum of the first background, and of the ink — 305

$$R(d_g; l) \qquad R(d_a; l)$$

Accept (measure) spectrum of the ink printed on the first background — 307

$$R(d_g, d_a; l)$$

Calculate the IAR function of the ink when printed on the first background — 309

Accept (measure) spectrum of the second background — 311

$$R(d_c; l)$$

Calculate the IAR function of the ink printed on the second background as the IAR function calculated using the first background exponentiated by the ratio of the spectral measures of the second background to the first background — 313

Done

# FIG. 3

**403**
Convert the CIELAB to CIEXYZ to determine X, Y, and Z

**405**
Initialize by accepting an initial spectrum and the filters for determining X, Y, Z and the white point, respectively.

**407**
Initially, the current spectrum is the initial spectrum.

**419**
Previous XYZ = current XYZ

**409**
Determine the current XYZ from the current spectrum, e.g., using a function GetXYZfromSpectrum()

**417**
Add increment to current spectrum

**411**
Determine an error function of the difference between the current XYZ and the previous XYZ

**413**
If error less than threshold

No

Yes

**415**
Spectrum is current spectrum

Done

# FIG. 4

FIG. 5

FIG. 6A

FIG. 6B

FIG. 7

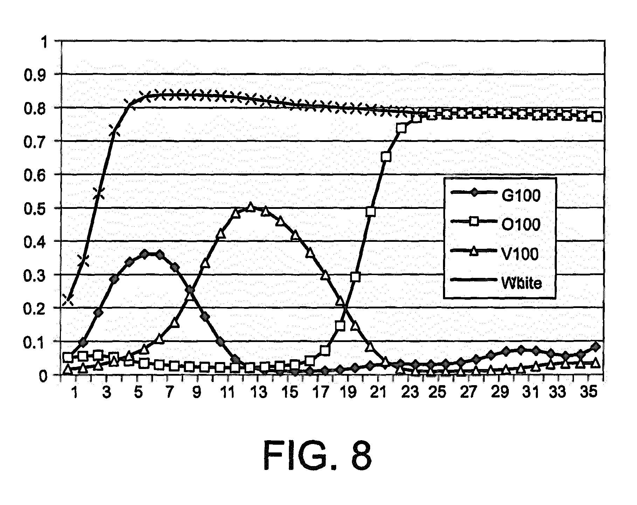

FIG. 8

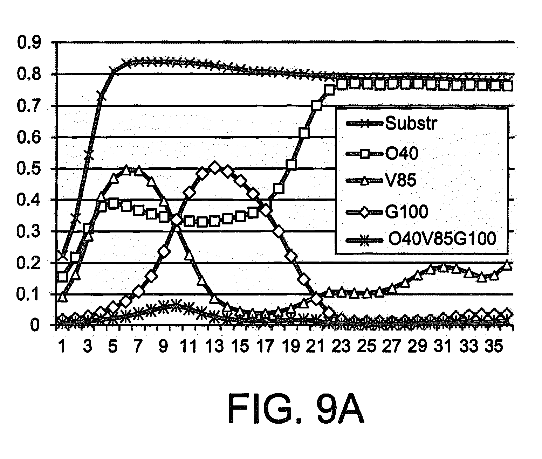

FIG. 9A

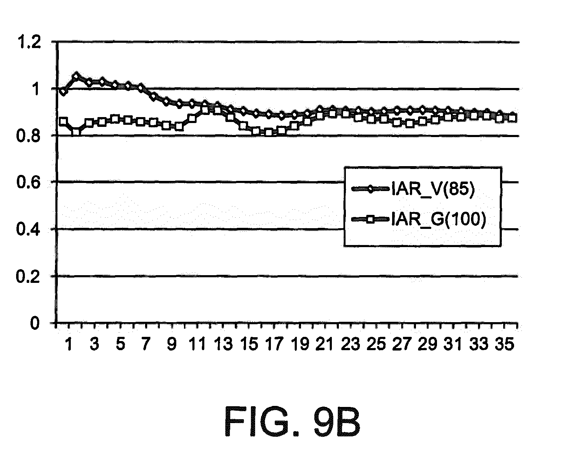

FIG. 9B

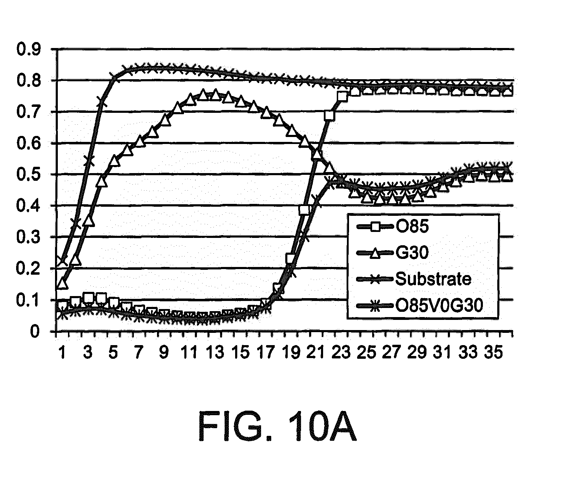

FIG. 10A

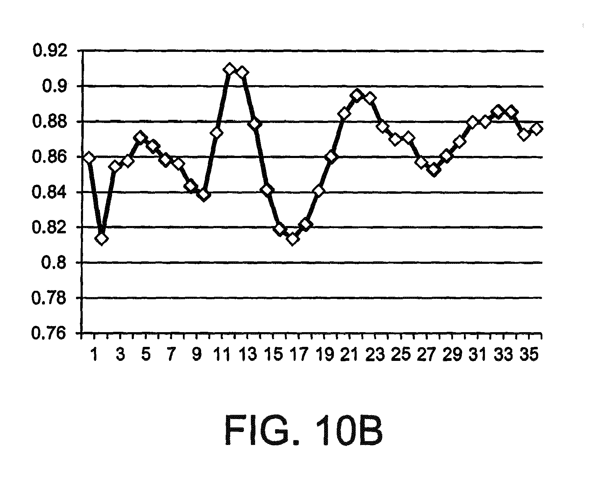

FIG. 10B